# EUROPÄISCHE PATENTANMELDUNG

(11) **EP 4 091 502 A1**
(43) Veröffentlichungstag der Anmeldung: **23.11.2022**
(21) Anmeldenummer: 22020228.7
(22) Anmeldetag: 16.05.2022
(51) Int. Cl.: A47C 4/02, A47C 7/42

(54) **RÜCKENLEHNENTRÄGER FÜR EIN SITZMÖBEL**

(30) Priorität: 21.05.2021 DE 102021113337
(71) Anmelder: BOCK 1 GmbH & Co. KG, 92353 Postbauer-Heng (DE)
(72) Erfinder: Bock, Hermann, 90602 Pyrbaum (DE); Ploetz, Stefan, 92318 Neumarkt (DE)
(74) Vertreter: Schneider, Andreas

(57) **Zusammenfassung**

Die Erfindung betrifft einen Rückenlehnenträger für ein Sitzmöbel, insbesondere für einen Bürostuhl.

Um ein Sitzmöbel mit Rückenlehne bereitzustellen, bei dem eine besonders einfache und sichere Montage und Demontage der Rückenlehne möglich ist, wird vorgeschlagen, den Rückenlehnenträger (2) zweiteilig auszuführen, mit einem ersten Trägerteil (4), das mit einem zweiten Trägerteil (5) unter Ausbildung einer lösbaren Verbindung werkzeuglos verbindbar ist, wobei im zusammengebauten Zustand die Lage der beiden Trägerteile (4, 5) zueinander mittels einer Verriegelung (6) werkzeuglos sicherbar ist.

## Beschreibung

Die Erfindung betrifft einen Rückenlehnenträger für ein Sitzmöbel, insbesondere für einen Bürostuhl. Darüber hinaus betrifft die Erfindung ein Sitzmöbel, insbesondere einen Bürostuhl, mit einem solchen Rückenlehnenträger.

Um Versandkosten zu sparen, werden Sitzmöbel oft in einem demontierten Zustand versendet. Bei Bürostühlen ist dabei regelmäßig der Stuhlrücken nicht montiert, sondern liegt den anderen Möbelteilen lose bei. Auch bei einem häufigen Wechsel des Standortes des Arbeitsplatzes kann es erforderlich sein, einen Stuhl mehrfach zu demontieren und wieder zusammenzubauen.

Die Montage eines Stuhlrückens an einem Stuhl ist bisher vergleichsweise aufwendig und benötigt in der Regel spezielles Werkzeug. Soll die Montage von einem Laien durchgeführt werden, ist für diesen oftmals nicht erkennbar, ob der Stuhlrücken tatsächlich richtig montiert wurde. Bei nicht korrekt montierten Stuhlrücken besteht die Gefahr, daß der Stuhl bei einer Benutzung beschädigt wird oder daß sich der Benutzer verletzt.

Eine Aufgabe der vorliegenden Erfindung ist es, ein Sitzmöbel mit Rückenlehne bereitzustellen, bei dem eine besonders einfache und sichere Montage und Demontage der Rückenlehne möglich ist.

Diese Aufgabe wird durch einen Rückenlehnenträger nach Anspruch 1 bzw. durch ein Sitzmöbel nach Anspruch 10 gelöst. Vorteilhafte Ausführungen der Erfindung sind in den Unteransprüchen angegeben.

Die im Folgenden im Zusammenhang mit dem Rückenlehnenträger erläuterten Vorteile und Ausgestaltungen gelten sinngemäß auch für das erfindungsgemäße Sitzmöbel und umgekehrt.

Eine Kernidee der Erfindung ist es, den Rückenlehnenträger zweiteilig auszuführen, nämlich mit einem ersten Trägerteil, das mit einem zweiten Trägerteil unter Ausbildung einer lösbaren Verbindung werkzeuglos verbindbar ist, wobei zum Erreichen des Montageendzustandes die Lage der beiden Trägerteile zueinander mittels einer, vorzugsweise manuell betätigbaren, Verriegelung werkzeuglos sicherbar ist.

Mit Hilfe der Erfindung kann ein Stuhlrücken von einem technischen Laien, wie beispielsweise einem Endkunden, selbst und ohne Werkzeug montiert und demontiert werden. Mit Hilfe der Erfindung wird dabei stets gewährleistet, daß die hergestellte mechanische Verbindung zwischen den beiden Trägerteilen sicher ist.

Über die einfache, werkzeuglose und sichere Montage hinaus erlaubt die Erfindung eine mehrfache Rückmeldung an den Monteur, so daß dieser auf einfache und fehlersichere Weise nachvollziehen kann, ob der Rücken ordnungsgemäß und sicher montiert ist.

Trotz der Zweiteiligkeit des Rückenlehnenträgers wird mit Hilfe der Erfindung sichergestellt, daß der Rücken im Montageendzustand spielfrei montiert ist und bleibt. Eine spielfreie Verbindung ist dabei auch nach mehrfachen Auseinanderbauen und Montieren dauerhaft gewährleistet.

Vorzugsweise sind diese beiden Trägerteile verschiedenen Sitzmöbelkomponenten zugeordnet. Insbesondere ist das eine Trägerteil konstruktiv der Rückenlehne zugeordnet und trägt im herkömmlichen Sinn die Rückenlehne, während das andere Trägerteil konstruktiv dem übrigen Sitzmöbel zugeordnet ist, insbesondere dem Basisträger, dem Sitzträger oder einem anderen Träger- oder Rahmenelement des Sitzmöbels. Die einzelnen Trägerteile können dabei wiederum unter Ausbildung einer lösbaren Verbindung mit den ihnen zugeordneten Sitzmöbelkomponenten verbindbar sein. Alternativ dazu können die Trägerteile aber auch einteilig oder einstückig mit den ihnen zugeordneten Sitzmöbelkomponenten verbunden sein.

Gemäß einer bevorzugten Ausführungsform der Erfindung ist es vorgesehen, daß das erste Trägerteil als rückenlehnenseitiges Trägerteil ausgeführt ist und somit mit einer Rückenlehne eines Sitzmöbels verbindbar ist oder als integraler Teil einer solchen Rückenlehne ausgebildet ist, während das zweite Trägerteil als basisträgerseitiges Trägerteil ausgeführt ist und somit mit einem Basisträger eines Sitzmöbels verbindbar ist oder als integraler Teil eines solchen Basisträgers ausgebildet ist. Die Erfindung ist jedoch nicht auf diese Aufteilung der Funktionen des zweigeteilten Rückenlehnenträgers beschränkt. Es kann auch das erste Trägerteil als basisträgerseitiges Trägerteil ausgeführt sein, während das zweite Trägerteil als rückenlehnenseitiges Trägerteil ausgeführt ist.

Gemäß einer bevorzugten Ausführungsform der Erfindung sind die beiden Trägerteile derart ausgeführt, daß das eine Trägerteil in das andere Trägerteil einlegbar ist, wobei bereits in diesem noch nicht verriegelten Montagezustand geeignet ausgeführte, gegeneinanderstoßende bzw. aneinander anliegende Verbindungsflächen der beiden Trägerteile eine Bewegung des einen Trägerteils relativ zu dem anderen Trägerteil in mindestens einer Raumrichtung verhindern. Als besonders vorteilhaft hat es sich erwiesen, wenn das oftmals einfacher handhabbare, rückenlehnenseitige Trägerteil in das basisträgerseitige Trägerteil eingehängt wird, da der Basisträger, Rahmen oder dergleichen des Sitzmöbels zumeist bereits mit einem Unterbau, wie beispielsweise einem Stuhlkreuz oder dergleichen verbunden ist und zum Zeitpunkt der Montage auf dem Boden steht. Die Verbindungsflächen der beiden Trägerteile sind dann vorzugsweise derart ausgeführt, daß bereits ein Verschwenken des montierten rückenlehnenseitigen Trägerteils mitsamt der Rückenlehne in Schwenkrichtung möglich ist. Anders ausgedrückt kann die Rückenlehne bereits von ihrer unverschwenkten, typischerweise mehr oder weniger aufrechten Stellung in eine nach hinten verschwenkte Stellung gebracht werden, ohne daß sich die Verbindung zwischen den beiden Trägerteilen löst. Im Anschluß an diesen ersten Fügeschritt kann dann das Sichern der Verbindung durch die Verriegelung erfolgen.

Gemäß einer bevorzugten Ausführungsform der Erfindung ist die Verriegelung zwischen beiden Trägerteilen herstellbar, indem ein an dem einen Trägerteil geführter Riegel in eine an dem anderen Trägerteil vorgesehene Aufnahme eingreift. Riegel und/oder Aufnahme sind dabei derart ausgeführt, daß eine Schubkeilverbindung hergestellt wird. Bei dieser werden mit Keilflächen versehene Werkstücke gegeneinander gradlinig verschoben, um die Verbindung zu fügen bzw. zu lösen. Aufgrund dieser Schubkeilverbindung ist nicht nur eine besonders einfache und sichere Verbindung der beiden Trägerteile möglich, es können auch Fertigungstoleranzen, wie sie bei der Herstellung der Trägerteile auftreten, einfach und wirkungsvoll ausgeglichen werden. Als besonders vorteilhaft hat es sich erwiesen, wenn der Eingriff des Riegels in der Aufnahme mittels einer Federanordnung gesichert ist, die eine Anzahl auf den Riegel wirkende Federelemente aufweist. Auf diese Weise kann eine sichere Verriegelung unter Beibehaltung des Toleranzausgleiches dauerhaft gewährleistet werden.

Gemäß einer bevorzugten Ausführungsform der Erfindung erfolgt der Eingriff des Riegels in die Aufnahme durch vorzugsweise gradliniges Verschieben des Riegels und der Riegel weist mindestens eine unter einem Winkel α gegen die Schubbahn geneigte Riegel-Keilfläche auf, wodurch im Montageendzustand die Lage der beiden Trägerteile zueinander gesichert ist. Vorzugsweise ist dieser Keilwinkel α so flach, daß die Verriegelung selbsthemmend ist, insbesondere derart, daß ein Herausdrücken des Riegels aus der Aufnahme bei allen funktionsgemäßen Bewegungen des Sitzmöbels, insbesondere auch bei einem Verschwenken der Rückenlehne, verhindert wird.

Gemäß einer bevorzugten Ausführungsform der Erfindung weist die Aufnahme mindestens eine korrespondierende, d. h. bei einem Eingreifen des Riegels in die Aufnahme mit der Riegel-Keilfläche zusammenwirkende, ebenfalls den Keilwinkel α aufweisende, Aufnahme-Keilfläche auf. Die gegenseitige Lage der beiden Werkstücke ist dann aufgrund der Keilwirkung kraft- und formschlüssig gesichert.

Gemäß einer bevorzugten Ausführungsform der Erfindung weist das eine Trägerteil einen zum Verschieben des Riegels ausgebildeten Kniehebelmechanismus auf. Mit Hilfe dieses Kniehebelmechanismus ist eine besonders einfache und sichere Betätigung der Verriegelung der beiden Trägerteile möglich. Gleichzeitig lassen sich damit die gewünschten Rückmeldeeigenschaften im Zusammenhang mit dem Erreichen des Montageendzustandes besonders einfach verwirklichen.

Gemäß einer bevorzugten Ausführungsform der Erfindung wird bei der Betätigung des Kniehebelmechanismus während des Verriegelns der Verbindung die Kniehebeldrehachse über einen Totpunkt bewegt, wenn eine vorgegebenen Kraft überschritten wird, so daß eine anschließende Bewegung des Kniehebelmechanismus ohne äußere Einwirkung nicht mehr möglich ist. Mit Hilfe einer solchen Übertotpunktverriegelung ist eine sehr sichere Verbindung herstellbar, bei der ein unbeabsichtigtes Lösen ausgeschlossen ist.

Mit der Erfindung werden die konstruktiven und bedientechnischen Vorteile eines Kniehebelmechanismus mit den Vorteilen eines auf den Riegel wirkenden Federanordnung kombiniert, so daß nicht nur ein dauerhafter Toleranzausgleich sondern auch eine dauerhafte Sicherung der Schubkeilverbindung ermöglicht wird.

Ein Ausführungsbeispiel der Erfindung wird nachfolgend anhand der Zeichnungen näher erläutert. Hierbei zeigen:
- Fig. 1: eine perspektivische Ansicht des Rückenlehnenträgers vor dem Zusammenbau schräg von oben,
- Fig. 2: eine perspektivische Ansicht des Rückenlehnenträgers vor dem Zusammenbauschräg von unten,
- Fig. 3: eine Explosionsdarstellung des zweiten Trägerteils,
- Fig. 4: eine perspektivische Ansicht des zweiten Trägerteils mit geöffneter Handhabe,
- Fig. 5: eine erste perspektivische Ansicht des zweiten Trägerteils mit geschlossener Handhabe,
- Fig. 6: eine zweite perspektivische Ansicht des zweiten Trägerteils mit geschlossener Handhabe
- Fig. 7: eine Ansicht des Rückenlehnenträgers während des ersten Montageschrittes (erster Längsschnitt),
- Fig. 8: eine Ansicht des Rückenlehnenträgers nach dem ersten Montageschritt (erster Längsschnitt),
- Fig. 9: eine Ansicht des Rückenlehnenträgers nach dem ersten Montageschritt (zweiter Längsschnitt),
- Fig. 10: eine Ansicht des Rückenlehnenträgers nach dem zweiten Montageschritt (zweiter Längsschnitt),
- Fig. 11: eine Detailansicht des in der Aufnahme einliegenden Riegels.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

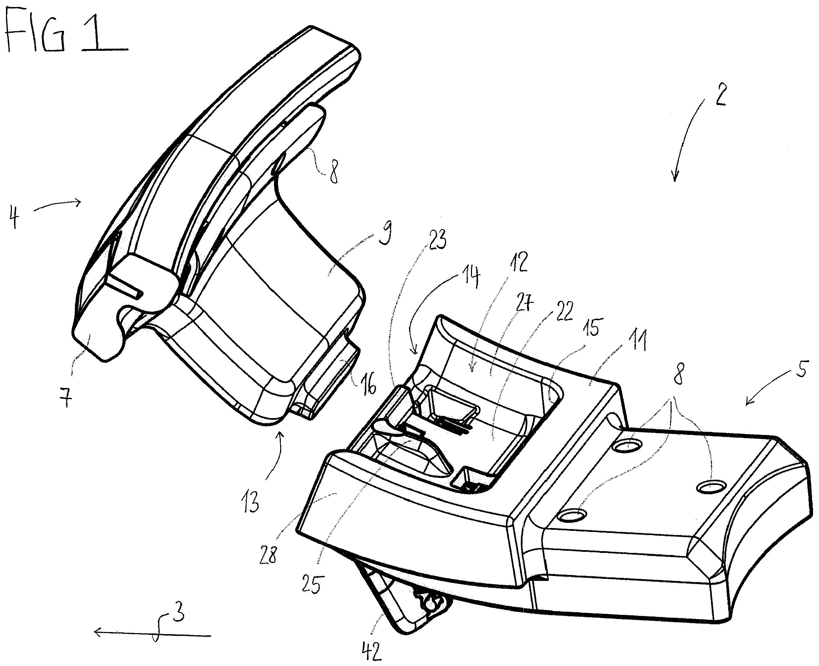

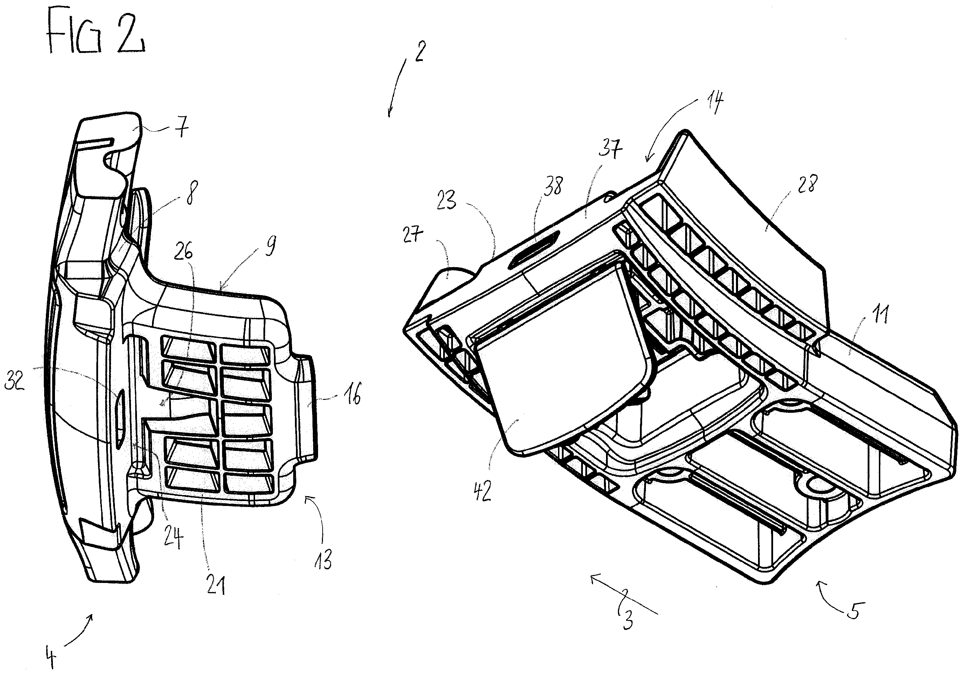

Die Erfindung wird am Beispiel eines Rückenlehnenträgers 2 für einen Bürostuhl erläutert. Der Rückenlehnenträger 2 ist zweiteilig ausgeführt. Die Teilung erfolgt dabei quer zu der Stuhllängsrichtung 3. Der Rückenlehnenträger 2 weist ein erstes Trägerteil 4 und ein zweites Trägerteil 5 auf, siehe Fig. 1 und 2. Diese Trägerteile 4, 5 sind unter Ausbildung einer lösbaren Verbindung miteinander verbindbar. Zum Erreichen des Montageendzustandes ist die Lage der beiden Trägerteile 4, 5 zueinander mittels einer vorzugsweise manuell betätigbaren Verriegelung 6 sicherbar.

Bis auf die für die gelenkigen Anbindungen benötigten Achse und die Federelemente der Federanordnung sind alle Komponenten des Rückenlehnenträgers 2 aus Kunststoff gefertigt.

Das erste Trägerteil 4 ist als rückenlehnenseitiges Trägerteil ausgeführt und damit konstruktiv der Rückenlehne 7 zugeordnet. Es trägt die Rückenlehne 7 (in den Figuren nur angedeutet) . Dabei sind das erste Trägerteil 4 und die Rückenlehne 7 aus einem Stück gefertigt. Das zweite Trägerteil 5 ist als basisträgerseitiges Trägerteil ausgeführt und damit konstruktiv dem Basisträger (nicht abgebildet) des Bürostuhls zugeordnet. Es ist mit dem Basisträger in dem hier gezeigten Beispiel mit Hilfe von Schrauben verbindbar, zu welchem Zweck Schraubenbohrungen 8 in dem Trägerteil 5 vorgesehen sind.

Die Montage erfolgt werkzeuglos in zwei Schritten. In einem ersten Schritt wird das erste Trägerteil 4 in das zweite Trägerteil 5 eingelegt, wobei bereits durch dieses Aneinander- bzw. Ineinander-Fügen der Rückenlehnenträger 2 derart zusammengebaut ist, daß die Trägerteile 4, 5 aneinander halten. Zum Erreichen des Montageendzustandes, in dem die Trägerteile 4, 5 spielfrei fest miteinander verbunden sind, erfolgt in einem anschließenden zweiten Schritt ein manuelles Verriegeln der Verbindung.

Mit Hilfe der durch das Einlegen des ersten Trägerteils 4 in das zweite Trägerteil 5 hergestellten lösbaren Verbindung der beiden Trägerteile wird bereits die Bewegung eines Trägerteils 4 gegenüber dem anderen Trägerteil 5 in ausgewählten Raumrichtungen verhindert. Die Verbindungsflächen der beiden Trägerteile 4, 5 sind dabei derart ausgebildet, daß bereits nach dem ersten Montageschritt keines der beiden Trägerteile 4, 5 mehr von dem Monteur gehalten werden muß. Eine Schwenkbewegung des Rückenlehnenträgers 2 in Stuhllängsrichtung 3 nach hinten ist ebenfalls bereits möglich.

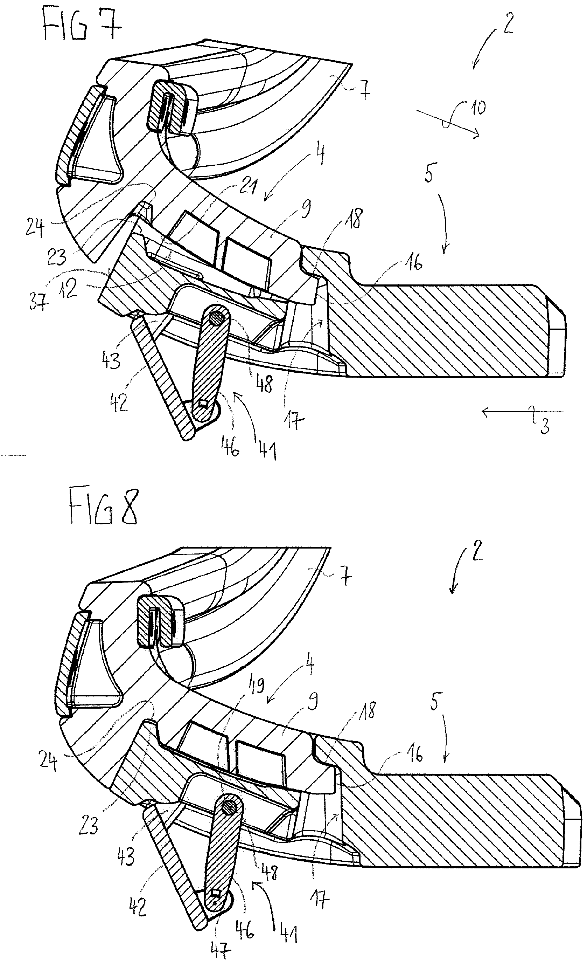

In dem illustrierten Beispiel wird eine sich zentral von der Basis 8 des ersten Trägerteils 4 weg nach vorn, in Stuhllängsrichtung 3 erstreckende Wange 9 schräg von oben in eine an dem Grundkörper 11 des zweiten Trägerteils 5 vorgesehene, nach oben geöffnete, wannenförmige Ausnehmung 12 eingelegt, so daß sich die beiden Trägerteile 4, 5 überlappen. Die Montage erfolgt dabei durch eine Bewegung des von dem Monteur bewegten ersten Trägerteils 4 in Stuhllängsrichtung 3 auf das feststehende zweite Trägerteil 5 zu. Die Montagerichtung (Pfeil 10) ist somit von links nach rechts in Fig. 7. Für eine vereinfachte Montage läuft die Wange 9 in Richtung ihres vorderen freien Endes 13 leicht konisch zu; die Ausnehmung 12 verjüngt sich dementsprechend ebenfalls leicht von ihrer vorderseitigen Öffnung 14 her in Richtung ihrer hinteren Stirnseite 15.

Die Wange 9 weist an ihrem vorderen, freien Ende 13 eine sich quer zu der Stuhllängsrichtung 3 erstreckende Haltenase 16 auf. Bei der Montage wird die Haltenase 16 in eine an der hinteren Stirnseite 15 der Ausnehmung 12 vorgesehene Aussparung 17 eingeführt derart, daß sie im gefügten Zustand unter einer Haltekante 18 der Aussparung 17 plaziert ist, siehe Fig. 7. Auf diese Weise wird das erste Trägerteil 4 in das zweite Trägerteil 5 eingehängt.

Im dem so montierten Zustand bilden die Oberseiten und die Unterseiten beider Trägerteile 4, 5 im wesentlichen durchgehende Oberflächen des Rückenlehnenträgers 2 aus, die denjenigen Oberflächenverläufen eines einteiligen Rückenlehnenträgers entsprechen, siehe Fig. 8 bis 10.

Die Unterseite 21 der Wange 9 sowie der Boden 22 der Ausnehmung 12 sind mit im wesentlichen zueinander korrespondierenden Konturen versehen, die im montierten Zustand aneinander anliegen. Die Kontur des Bodens 22 umfaßt einen quer zu Stuhllängsrichtung 3 verlaufenden, geradlinig gebildeten Haltekragen 23, der mittig in der vorderseitigen Öffnung 14 der Ausnehmung 12 angeordnet ist, der hinteren Stirnseite 15 der Ausnehmung 12 gegenüberliegend. Der Haltekragen 23 greift im montierten Zustand in eine korrespondierende, quer zu der Stuhllängsrichtung 3 verlaufende Haltenut 24 ein, die an der Kontur der Unterseite 21 der Wange 9 vorgesehen ist, unmittelbar bevor die Wange 9 an die Basis 8 anschließt. Auf diese Weise bilden Haltekragen 23 und Haltenut 24 eine Auszugssicherung. Mittig an dem Haltekragen 23 angebunden ist ein sich in Richtung Stirnseite 15 der Ausnehmung 12 erstreckender Führungsarm 25 vorgesehen, der im montierten Zustand in einer passenden Führungsaufnahme 26 an der Unterseite 21 der Wange 9 einliegt. Diese Führungsarm-Führungsaufnahme-Kombination 25, 26 dient dazu, durch ein zentrierendes Führen das Einlegen des ersten Trägerteils 4 in das zweite Trägerteil 5 zu erleichtern.

In Verbindung mit der an der Haltekante 18 anliegenden, die Haltekante 18 untergreifenden Haltenase 16, die eine Sicherung gegen entgegen der Montagerichtung 10 gerichtete Hebelbewegungen des ersten Trägerteils 4 bildet, wird durch die Haltekragen-Haltenut-Kombination 23, 24 das erste Trägerteil 4 an dem zweiten Trägerteil 5 zumindest bezüglich einer Raumrichtung festgelegt. Da das erste Trägerteil 4 darüber hinaus in der wannenförmigen Ausnehmung 12 einliegt, die durch ihre seitlichen Begrenzungswände 27, 28 eine Bewegung des ersten Trägerteils 4 auch seitlich begrenzt, ist im Ergebnis nach dem Vollzug des ersten Montageschrittes das erste Trägerteil 4 bereits in zwei Raumrichtungen festgelegt.

Sind zumindest einige der zusammenwirkenden Verbindungsflächen der beiden Trägerteile 4, 5 auf geeignete Weise keil- bzw. prismenförmig ausgeführt, kann hierdurch ein Ausgleich des durch Fertigungstoleranzen hervorgerufenen mechanischen Spiels zwischen den beiden Trägerteilen 4, 5 erfolgen. Insbesondere kann das Spiel in horizontaler Richtung durch eine in Keil- bzw. Prismenform gestaltete Haltekragen-Haltenut-Kombination 23, 24 eliminiert werden. Die entsprechenden Querschnittskonturen werden aus Fig. 7 und 8 deutlich.

Durch die in dem zweiten Montageschritt hergestellt Verriegelung 6 werden anschließend die Verbindungsflächen des einen Trägerteils spielfrei an den Verbindungsflächen des anderen Trägerteils dauerhaft angelegt. Damit wird der Montageendzustand erreicht, in dem das erste Trägerteil 4 in allen Raumrichtungen an dem zweiten Trägerteil 5 festgelegt ist.

Im montierten Zustand wird die Lage der beiden Trägerteile 4, 5 zueinander durch eine Schubkeilverbindung gesichert. Damit der erste Trägerteil 4 nicht mehr aus dem zweiten Trägerteil 5 herausgehoben werden kann, muß es gesperrt werden. Zu diesem Zweck greift ein an dem zweiten Trägerteil 5 ausgebildeter Riegel 31 in eine Aufnahme 32 an dem ersten Trägerteil 4 ein. Diese Aufnahme 32 ist unterhalb der Wange 9, mittig an dem ersten Trägerteil 4 vorgesehen. Eine auf den Riegel 32 wirkende Federanordnung 33, die den Riegel 31 in Richtung der Aufnahme 32 beaufschlagt, dient zur Sicherung dieses Eingriffs.

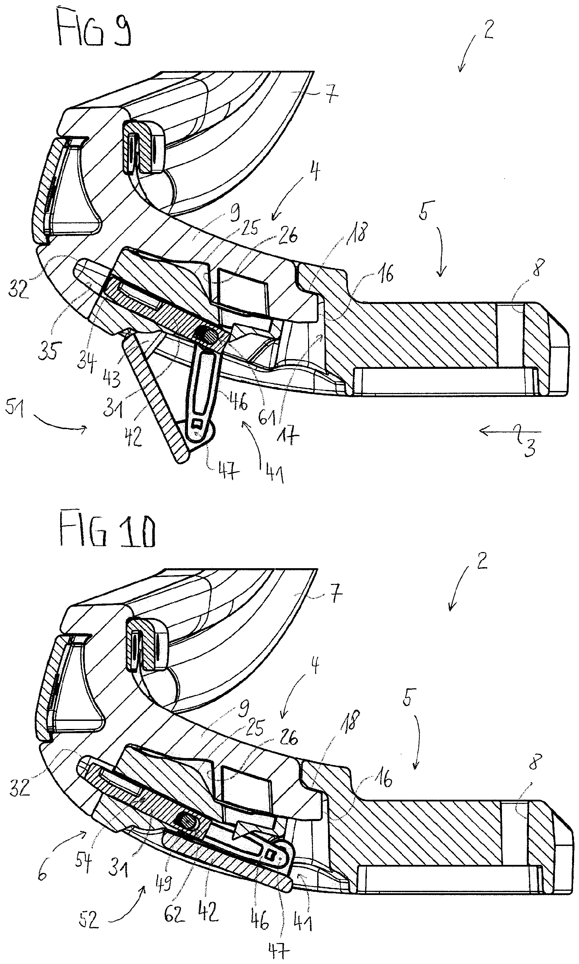

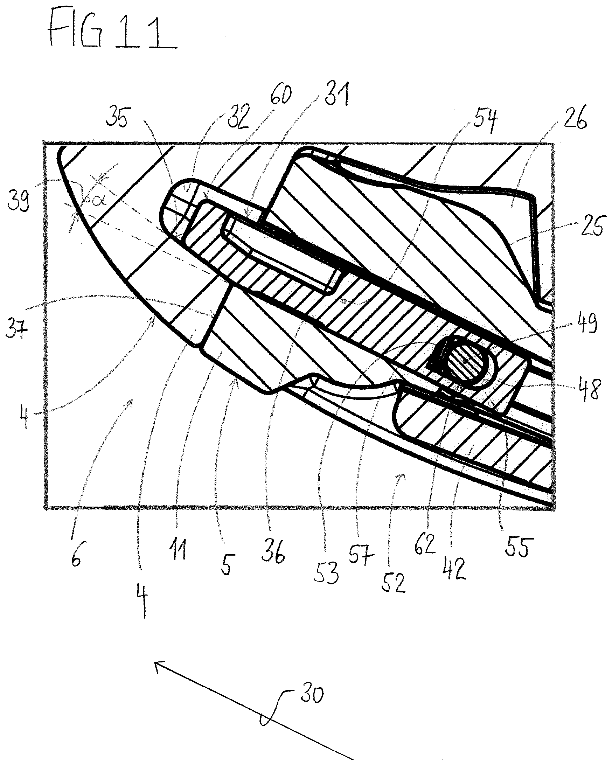

Aufgrund der Fertigungstoleranzen bei der Herstellung von Kunststoffteilen weist der Riegel 31 in der Aufnahme 32 ein mechanisches Spiel auf. Zugleich benötigt der Riegel 31 ein bestimmtes mechanisches Spiel, damit er überhaupt in die Aufnahme 32 eingeführt werden kann. Für eine feste und sichere Montage des Stuhlrückens am Stuhl muß das Spiel im Montageendzustand des Rückenlehnenträgers 2 jedoch vollständig eliminiert sein. Dies wird durch eine Keilform des Riegels 31 in Verbindung mit einer entsprechenden Prismenform der Aufnahme 32 einerseits und durch das Wirken der Federanordnung 33 auf den Riegel 31 andererseits gewährleistet. Riegel 31 und Aufnahme 32 sind zu diesem Zweck derart ausgeführt, daß sie während des Eingriffs eine Schubkeilverbindung herstellen. Der Riegel 31 weist mindestens eine unter einem Winkel α (Keilwinkel 39) gegen die Schubbahn geneigte Riegel-Keilfläche 34 auf, wodurch im Montageendzustand die Lage der beiden Trägerteile 4, 5 zueinander kraft- und formschlüssig gesichert ist. Die Aufnahme 32 weist eine korrespondierende Aufnahme-Keilfläche 35 auf, siehe Fig. 9 und 11.

Der Riegel 31 muß nicht allseitig in der Aufnahme 32 einliegen. Wie in Fig. 10 illustriert, ist es ausreichend, wenn die korrespondierenden Keilflächen 34, 35 aneinander anliegen. Die Führung des Riegels 31 erfolgt in diesem Fall nicht innerhalb der Aufnahme 32. Statt dessen ist der Riegel 31 in einer mittig in dem Grundkörper 11 des zweiten Trägerteils 5 angebrachten Schubführung 36 geführt und darin geradlinig verschiebbar ist. Während der Herstellung der Verriegelung fährt der Riegel 31 aus der mittig an der Stirnseite 37 des Grundkörpers 11 angebrachten Öffnung 38 der Schubführung 36 heraus und in die Aufnahme 32 hinein, solange bis er mit seiner schrägen Flanke 34 satt an der korrespondierenden Wandfläche 35 der Aufnahme 32 anliegt. Mit anderen Worten erfolgt ein Verschieben der unter dem Winkel α gegen die Schubbahn geneigten Keilfläche 34 des Riegels 31. Der als Schubkeil ausgeführte Riegel 31 wird dabei entlang den Wänden der Schubführung 36 geführt, die als Führungsflächen dienen.

Der Riegel 31 wird durch die Federanordnung 33 permanent mit einer in Verriegelungsrichtung 30 wirkenden Kraft beaufschlagt. Die Verriegelungsrichtung 30 ist entgegengesetzt der Montagerichtung 10. Diese Kraft bewirkt einen Druck auf den Riegel 31, der sicherstellt, daß er in die Aufnahme 32 gedrückt wird. Somit hält die Federanordnung 33 den Riegel 31 im Montageendzustand, d.h. während der gesamten Dauer der Verriegelung, unter Belastung.

Um im verriegelten Zustand bei allen funktionsgemäßen Bewegungen des Stuhles, insbesondere bei einem Zurückschwenken des Rückenlehnenträgers 2 aus einer verschwenkten hinteren Stellung in Stuhllängsrichtung 3 nach vorn, trotz der Beaufschlagung des Riegels 31 durch die Federanordnung 33 ein Herausdrücken des Riegels 31 aus der Aufnahme 32 zu verhindern, ist die Verriegelung 6 selbsthemmend ausgeführt. Dies wird durch einen sehr flachen Keilwinkel 39 (α) gewährleistet. Zur sicheren Verwirklichung der Selbsthemmungseigenschaften darf der Keilwinkel 39 einen definierten Höchstwert nicht überschreiten.

An dem zweiten Trägerteil 5 ist eine zum Verschieben des Riegels 31 ausgebildeten Kniehebelmechanismus 41 vorgesehen, mit dessen Hilfe der Riegel 31 aus dem zweiten Trägerteil 5 ausgefahren wird und in der Folge in die Aufnahme 32 an dem ersten Trägerteil 4 zur Herstellung der Schubkeilverbindung eingreift.

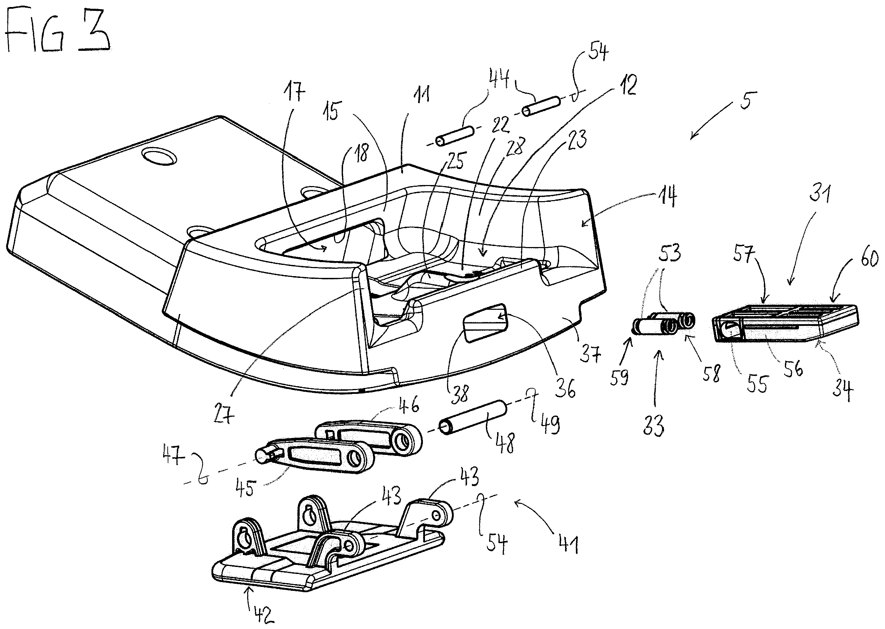

Der Kniehebelmechanismus 41 weist wie üblich drei Drehpunkte (Drehachsen) und zwei das Kniehebelgestänge bildende Schenkel auf. Dabei wird der erste Schenkel des Kniehebelmechanismus 41 durch eine Handhabe 42 gebildet, die mit ihrer einen Seite mittig an dem Grundkörper 11 des zweiten Trägerteils 5 angelenkt ist. Hierzu sind an der Handhabe 42 angebrachte Lenker 43 an Achsen 44 schwenkbar gelagert, die in dem Grundkörper 11 ortsfest einliegen. Durch diese Anlenkung der Handhabe 42 an dem Grundkörper 11 wird der erste Drehpunkt 54 des Kniehebelmechanismus 41 gebildet, siehe Fig. 3, 10 und 11.

Die Handhabe 42 ist in dem hier illustrierten Beispiel plattenförmig ausgebildet, kann jedoch unter Beibehaltung ihrer Funktion auch anders gestaltet sein, um sich in das Design des Sitzmöbels zu integrieren.

Mit ihrer gegenüberliegenden Seite ist die Handhabe 42 an einem Schenkelpaar 45, 46 angelenkt, das den zweiten Schenkel des Kniehebelgestänges 41 bildet. Hierdurch wird der zweite, mittlere Drehpunkt 47 des Kniehebelmechanismus 41 gebildet, siehe Fig. 9. Durch ein Verschwenken der Handhabe 42 um den ersten Drehpunkt 54 wird der zweite Drehpunkt 47 auf den Grundkörper 11 des zweiten Trägerteils 5 zu oder von diesem weg bewegt.

Während die beiden Schenkel 45, 46 des Schenkelpaares an ihren einen Enden mit der Handhabe 42 gelenkig verbunden sind, sind sie mit ihren anderen Enden fest mit einer beweglichen Achse 48 verbunden, die sich quer zu der Verriegelungsrichtung 30 (Verschieberichtung) des Riegels 31 erstreckt. Hierdurch wird der dritte Drehpunkt 49 des Kniehebelmechanismus 41 gebildet, siehe Fig. 11.

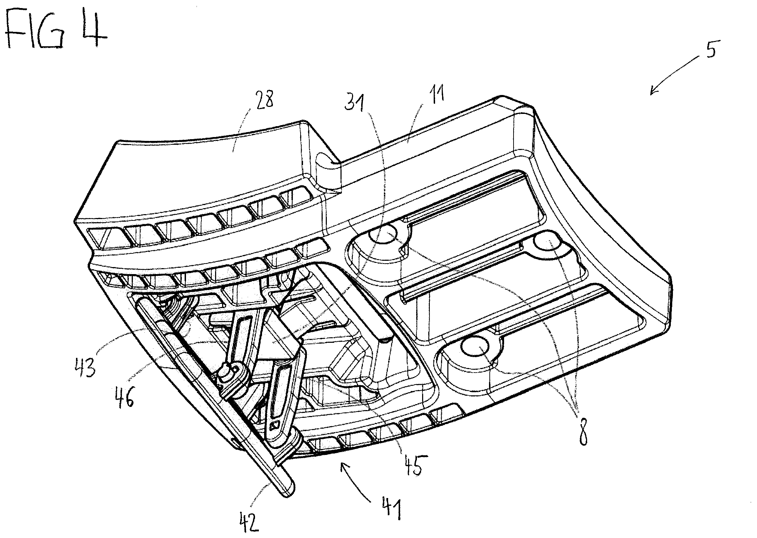

Der Kniehebelmechanismus 41 ist derart ausgeführt, daß sich die Handhabe 42 im unverriegelten Zustand, d.h. auch noch nach dem ersten Montageschritt, in einer Öffnungsstellung 51 befindet, in der die Handhabe 42 von dem zweiten Trägerteil 5 absteht, siehe Figuren 1, 2, 4, 7, 8 und 9. Aufgrund dieser abstehenden Stellung erfährt der Monteur das optische Signal, daß die Montage noch nicht abgeschlossen ist.

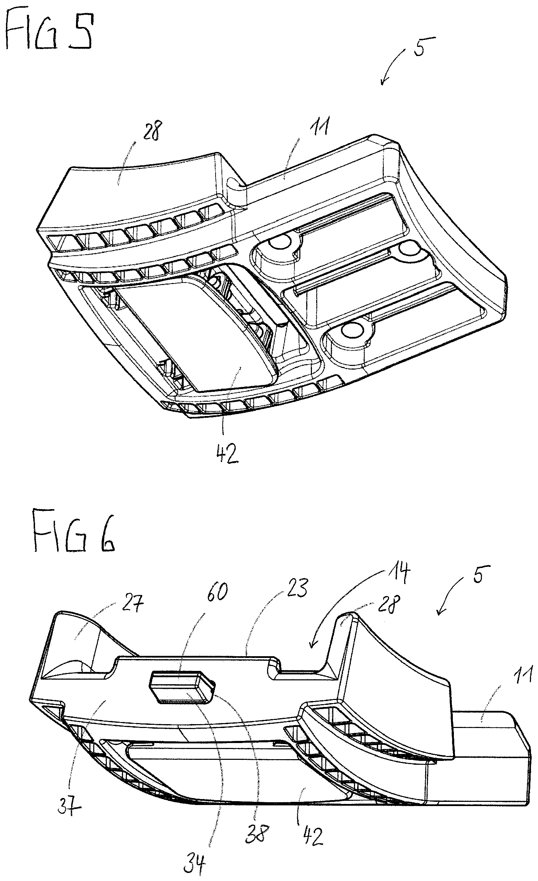

Bei einer Betätigung des Kniehebelmechanismus 41 wird dieser über seinen Totpunkt hinaus bewegt. Hierbei muß während des Bewegens der Handhabe 42 ein bestimmter Widerstand überwunden werden. Anschließend überstreckt sich der Kniehebel und das Kniehebelgestänge bewegt sich selbsttätig in seine Endposition, die eine stabile Lage des Kniehebelmechanismus 41 darstellt. Das Erreichen dieser Übertotpunktverriegelung wird dem Monteur somit haptisch signalisiert, gleichzeitig erfolgt durch das Einschnappen in die überstreckte Lage des Kniehebelgestänges eine akustische Signalisierung. Zudem steht im Montageendzustand die Handhabe 42 auch nicht mehr von dem zweiten Trägerteil 5 ab, sondern liegt in ihrer Verschlußstellung 52 an dem Grundkörper 12 des zweiten Trägerteils 5 an, so daß das Erreichen des Montageendzustandes von dem Monteur auch optisch überprüfbar ist, siehe Figuren 5, 6 und 10.

Das Herstellen der Übertotpunktverriegelung des Kniehebelmechanismus 41 erfolgt, indem während des Verriegelns der Schubkeilverbindung der beiden Trägerteile 4, 5 die Kniehebeldrehachse 47 über einen Totpunkt bewegt wird. Im Totpunkt befinden sich die Drehpunkte 47, 49, 54 und die einwirkenden Kräfte auf einer Geraden. In der Übertotpunktstellung liegt der Drehpunkt 47 oberhalb der die Drehpunkte 49, 54 verbindenden Linie, siehe Fig. 10.

Die Federanordnung 33 umfaßt zwei parallel wirkende Federelemente 53. Diese Federelemente 53 sind die den Riegel 31 während des Bestehens der Schubkeilverbindung beaufschlagenden Federelemente. Die Federelemente 53 stützen sich einerseits mit ihren fußseitigen Enden 58 an dem Riegel 31 ab, nämlich dort, wo der hohle Teil des Riegels 31 in den Riegelkopf 60 übergeht (in den Figuren nicht dargestellt). Andererseits stützen sich die Federelemente 53 mit ihren kopfseitigen Enden 59 an der beweglichen Achse 48 ab, deren Lage den dritten Drehpunkt 49 des Kniehebelmechanismus 41 definiert.

Um einerseits dem Riegel 31 das für die Ausbildung der Schubkeilverbindung benötigte Spiel in Verriegelungsrichtung 30 bereitzustellen und um andererseits zugleich eine dauerhafte Beaufschlagung des Riegels 31 während des Bestehens der Verriegelung 6 sicherzustellen, liegt die bewegliche Achse 48 in einem als Achsenführung ausgebildeten Langloch-Paar 55 ein. Das Langloch-Paar 55 ist in Seitenwänden 56 des Riegels 31 ausgebildet, die den hohlen Teil 57 des Riegels 31 seitlich begrenzen, der das fußseitige Ende des Riegels 31 bildet und in dem die Federelemente 53 einliegen, während das massive, kopfseitige Ende des Riegels 31, der Riegelkopf 60, an dem sich die fußseitigen Enden 58 der Federelemente 53 abstützen, zum Eingriff in die Aufnahme 32 dient.

Während des Vorgangs der Verriegelung bewegen sich beide durch die Handhabe 42 einerseits und das Schenkelpaar 45, 46 andererseits gebildeten Schenkel des Kniehebelgestänges relativ zueinander, wobei die kreisförmige Bewegungsbahn des zweiten Drehpunktes 47 durch die Anbindung der Handhabe 42 mit dem ersten Drehpunkt 54 an den Grundkörper 12 vorgegeben ist. Die lineare Bewegungsbahn des durch den zweiten Schenkel 45, 46 angesteuerten dritten Drehpunktes 49 ist durch die Führung des Riegels 31 innerhalb des zweiten Trägerteils 5 vorgegeben.

Während der unverriegelten Stellung der Trägerteile 4, 5 und während des Einfahrens des Riegels 31 in die Aufnahme 32 liegt die bewegliche Achse 48 in einer hinteren Stellung 61 in dem Langloch-Paar 55 ein, siehe Fig. 9. Wird der Totpunkt überfahren und ist die Übertotpunktverriegelung erreicht, beaufschlagen die an dem Riegel 31 angreifenden Federelemente 53 den Riegel 31 und die bewegliche Achse 48, an der sich die Federelemente 53 abstützen, liegt in einer gegenüber der hinteren Stellung 61 in Richtung des Riegelkopfes 60 nach vorn verlagerten vorderen Stellung 62 innerhalb des Langloch-Paares 55, siehe Fig. 10 und 11.

Die Federelemente 53 stellen sicher, daß die Handhabe 42 nach dem Überfahren des Todpunktes im geschlossenen Zustand verbleibt. Die Federelemente 53 stellen die Rückstellkraft auf die Handhabe 42 bereit, halten somit den Kniehebelmechanismus 41 in seiner Ruhestellung jenseits des Totpunktes.

Die Federelemente 53 sind derart ausgeführt, daß sie stets mit der benötigten Mindestkraft auf den Riegel 31 wirken, egal wie groß das durch Herstellungstoleranzen auftretende mechanische Spiel des Riegels 31 in der Aufnahme 32 ist.

Bei der in den Figuren illustrierten Ausführungsform wird die einzeln besser handhabbare Rückenlehne 7 in die Stuhlbasis (nicht dargestellt) eingehängt, wobei die Handhabe 42 als Teil des Kniehebelmechanismus 41 an dem basisträgerseitigen Trägerteil 5 vorgesehen ist. Die Erfindung ist jedoch nicht auf diese Aufteilung der Funktionen des zweigeteilten Rückenlehnenträgers 2 beschränkt. Auch eine genau umgekehrte Zuordnung ist möglich. Anstelle des Einhängens des ersten Trägerteils in das zweite Trägerteil kann auch das zweite Trägerteil in das erste Trägerteil eingehängt werden und/oder der Kniehebelmechanismus kann an dem rückenlehnenseitigen Trägerteil vorgesehen sein.

Alle in der Beschreibung, den nachfolgenden Ansprüchen und der Zeichnung dargestellten Merkmale können sowohl einzeln als auch in beliebiger Kombination miteinander erfindungswesentlich sein.

Diese Merkmale bzw. Merkmalskombinationen können jeweils eine selbständige Erfindung begründen, deren Inanspruchnahme ausdrücklich vorbehalten ist.

Bei der Angabe einer eine Erfindung definierenden Merkmalskombination müssen einzelne Merkmale aus der Beschreibung eines Ausführungsbeispiels nicht zwingend mit einem oder mehreren oder allen anderen in der Beschreibung dieses Ausführungsbeispiels angegebenen Merkmalen kombiniert werden; diesbezüglich ist jede Unterkombination von Merkmalen eines oder mehrerer Ausführungsbeispiele ausdrücklich mitoffenbart.

Außerdem können gegenständliche Merkmale der Vorrichtung umformuliert als Verfahrensmerkmale Verwendung finden und Verfahrensmerkmale können umformuliert als gegenständliche Merkmale der Vorrichtung Verwendung finden. Auf diese Weise umformulierte Merkmale sind implizit mitoffenbart.

### Bezugszeichenliste

- 1: (frei)
- 2: Rückenlehnenträger
- 3: Stuhllängsrichtung
- 4: erstes Trägerteil
- 5: zweites Trägerteil
- 6: Verriegelung
- 7: Rückenlehne
- 8: Basis des ersten Trägerteils
- 9: Wange
- 10: Montagerichtung
- 11: Grundkörper des zweiten Trägerteils
- 12: Ausnehmung
- 13: Freiende der Wange
- 14: Öffnung der Ausnehmung
- 15: Stirnseite der Ausnehmung
- 16: Haltenase
- 17: Aussparung
- 18: Haltekante
- 19: (frei)
- 20: (frei)
- 21: Unterseite der Wange
- 22: Boden der Ausnehmung
- 23: Haltekragen
- 24: Haltenut
- 25: Führungsarm
- 26: Führungsaufnahme
- 27: Begrenzungswand
- 28: Begrenzungswand
- 29: (frei)
- 30: Verriegelungsrichtung
- 31: Riegel
- 32: Aufnahme
- 33: Federanordnung
- 34: Riegel-Keilfläche
- 35: Aufnahme-Keilfläche
- 36: Schubführung
- 37: Stirnseite des Grundkörpers
- 38: Öffnung der Schubführung
- 39: Keilwinkel
- 40: (frei)
- 41: Kniehebelmechanismus
- 42: Handhabe
- 43: Lenker
- 44: ortsfeste Achse der Handhabe
- 45: Schenkel
- 46: Schenkel
- 47: zweiter Drehpunkt, Kniehebeldrehachse
- 48: verfahrbare Achse
- 49: dritter Drehpunkt
- 50: (frei)
- 51: Öffnungsstellung
- 52: Verschlußstellung
- 53: Federelement
- 54: erster Drehpunkt
- 55: Langloch-Paar
- 56: Seitenwand des Riegels
- 57: Hohlteil des Riegels
- 58: fußseitiges Ende
- 59: kopfseitiges Ende
- 60: Riegelkopf
- 61: hintere Stellung der Kniehebeldrehachse
- 62: vordere Stellung der Kniehebeldrehachse

## Patentansprüche

1. Rückenlehnenträger (2) für ein Sitzmöbel, insbesondere für einen Bürostuhl, mit einem ersten Trägerteil (4), das mit einem zweiten Trägerteil (5) unter Ausbildung einer lösbaren Verbindung werkzeuglos verbindbar ist, wobei im zusammengebauten Zustand die Lage der beiden Trägerteile (4, 5) zueinander mittels einer Verriegelung (6) werkzeuglos sicherbar ist.

2. Rückenlehnenträger (2) nach Anspruch 1, wobei die Verriegelung (6) herstellbar ist, indem ein an dem einen Trägerteil (5) geführter Riegel (31) in eine an dem anderen Trägerteil (4) vorgesehene Aufnahme (32) eingreift.

3. Rückenlehnenträger (2) nach Anspruch 2, wobei der Eingriff des Riegels (31) in die Aufnahme (32) mittels einer auf den Riegel (31) wirkenden Federanordnung (33) mit einer Anzahl Federelemente (53) gesichert ist.

4. Rückenlehnenträger (2) nach Anspruch 2 oder 3, wobei der Eingriff des Riegels (31) in die Aufnahme (32) durch Verschieben des Riegels (31) erfolgt und der Riegel (31) mindestens eine unter einem Winkel α (39) gegen die Schubbahn geneigte Riegel-Keilfläche (34) aufweist, wodurch im Montageendzustand die Lage der beiden Trägerteile (4, 5) zueinander gesichert ist.

5. Rückenlehnenträger (2) nach einem der Ansprüche 2 bis 4, wobei die Aufnahme (32) mindestens eine korrespondierende Aufnahme-Keilfläche (35) aufweist.

6. Rückenlehnenträger (2) nach einem der Ansprüche 2 bis 5, wobei das eine Trägerteil (5) einen zum Verschieben des Riegels (31) ausgebildeten Kniehebelmechanismus (41) aufweist.

7. Rückenlehnenträger (2) nach Anspruch 6, wobei bei einem Überschreiten einer vorgegebenen Kraft die Kniehebeldrehachse (47) über einen Totpunkt bewegbar ist und eine Bewegung des Kniehebelmechanismus (41) ohne äußere Einwirkung nicht mehr möglich ist.

8. Rückenlehnenträger (2) nach Anspruch 6, wobei der Kniehebelmechanismus (41) die Anzahl Federelemente (53) der Federanordnung (33) zur Sicherung des Riegels (31) in der Aufnahme (32) beaufschlagt.

9. Rückenlehnenträger (2) nach einem der Ansprüche 1 bis 8, wobei im zusammengebauten, unverriegelten Zustand die gegeneinanderstoßenden Verbindungsflächen der beiden Trägerteile (4, 5) eine Bewegung des einen Trägerteils (4, 5) relativ zu dem anderen Trägerteil (4, 5) in mindestens einer Raumrichtung verhindert.

10. Sitzmöbel, insbesondere Bürostuhl, mit einem Rückenlehnenträger (2) nach einem der Ansprüche 1 bis 9, dessen erstes Trägerteil (4) vorzugsweise mit einer Rückenlehne (7) des Sitzmöbels verbindbar ist oder als integraler Teil einer solchen Rückenlehne (7) ausgebildet ist, und dessen zweites Trägerteil (5) vorzugsweise mit einem Basisträger des Sitzmöbels verbindbar ist oder als integraler Teil eines solchen Basisträgers ausgebildet ist.
